## Europäisches Patentamt
## European Patent Office
## Office européen des brevets

(19)

(11) Veröffentlichungsnummer: **0 132 883**
**A2**

(12) # EUROPÄISCHE PATENTANMELDUNG

(21) Anmeldenummer: **84201041.5**

(22) Anmeldetag: **12.07.84**

(51) Int. Cl.⁴: **H 02 K 41/035**

(30) Priorität: **21.07.83 DE 3326238**

(43) Veröffentlichungstag der Anmeldung:
**13.02.85 Patentblatt 85/7**

(84) Benannte Vertragsstaaten:
**CH DE FR GB IT LI NL**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**CH FR GB IT LI NL**

(72) Erfinder: **Flisikowski, Peter**
**Joachim-Mähl-Strasse 1a**
**D-2000 Hamburg 61(DE)**

(74) Vertreter: **Kupfermann, Fritz-Joachim et al,**
**Philips Patentverwaltung GmbH Billstrasse 80 Postfach**
**10 51 49**
**D-2000 Hamburg 28(DE)**

(54) **Linearmotor zum raschen Hin- und Herbewegen eines massebehafteten Läuferschlittenbauteiles.**

(57) Linearmotor zum raschen Hin- und Herbewegen eines massebehafteten Läuferschlittenbauteiles, insbesondere eines Strahlenfilters (5) in einem Röntgen-Computer-Tomographen, mit parallel und im Abstand zueinander angeordneten, flächigen Statoreisen (9, 11), mit Dauermagneten (19), die auf den aufeinander zu weisenden Seiten der an den Enden offenen Statoreisen (9, 11) angeordnet sind. Über den sich zwischen den Dauermagneten (19) ausbildenden einzigen Luftspalt (21) baut sich ein Magnetfeld auf, in dem eine von einem Schlitten (23) geführte Spule (25) verschiebbar ist. Die mit ihrer Achse senkrecht zur Verschieberichtung angeordnete Flachspule (25) ist aus einer eloxierten Aluminiumfolie gewickelt, und der flache Kunststoffschlitten (23) ist in Gaslagern (31) geführt, die sich durch die Statoreisen (9, 11) auf Abstand haltende Aluminiumbrücken (15) zwischen den Statoreisen (9, 11) erstrecken.

EP 0 132 883 A2

./...

Fig. 1

Linearmotor zum raschen Hin- und Herbewegen eines
massebehafteten Läuferschlittenbauteiles

Die Erfindung bezieht sich auf einen Linearmotor zum
raschen Hin- und Herbewegen eines massebehafteten Läuferschlittenbauteiles, insbesondere eines Strahlenfilters in
einem Röntgen-Computer-Tomographen, mit parallel und im
Abstand zueinander angeordneten, flächigen Statoreisen,
mit Dauermagneten, die auf den aufeinander zu weisenden
Seiten der an den Enden offenen Statoreisen angeordnet
sind und über den sich dabei ausbildenden einzigen Luftspalt zwischen sich ein Magnetfeld aufbauen, und mit einer
im dauermagnetischen Magnetfeld verschieblichen, von einem
Schlitten geführten Spule.

Ein derartiger Linearmotor ist funktionsmäßig, wenn auch
mit räumlich etwas anderem Aufbau, aus der DE-OS 19 04 905
bekannt. Der die Spule tragende Schlitten ist dabei in
Gleitschienen außerhalb der magnetischen Anordnung gelagert.

Ein derartiger Linearmotor ist beispielsweise für
schreibende, messende oder lesende Geräte geeignet, bei
denen der Funktionskopf eine relativ geringe Masse aufweist. Darüber hinaus bemessen sich die Verstellzeiten des
Schlittens in der Größenordnung von Zehntelsekunden.

Es gibt Anwendungsfälle, in denen relativ große Massen
innerhalb von wenigen Millisekunden verstellt werden
müssen. Der bekannte Linearmotor ist dazu nicht in der
Lage.

Ein Anwendungsfall, in dem innerhalb von wenigen Millisekunden ein Läuferschlittenbauteil von einer Ruhestellung in eine andere verschoben werden soll, findet sich beispielsweise in der Computer-Tomographie. Innerhalb von 3,5 msec müssen dabei beispielsweise Filter hin und her verschoben werden, um im ständigen Wechsel mit 120 kV und 80 kV Röntgenaufnahmen zu machen. Die Röntgenaufnahmen werden dabei in Form von Signalen von Detektoren aufgenommen und in einem Rechner gespeichert. Um dies zu verwirklichen, muß ein Strahlenfilter innerhalb von 3,5 msec in den Strahlenbereich hinein und nach einer Stillstandszeit von 3,5 msec, innerhalb derer die Röntgenaufnahme durchgeführt wird, aus dem Strahlenbereich herausgefahren werden. Die Zykluszeit beträgt dabei also 7 msec.

Um die Verschiebung des Strahlenfilters innerhalb von 3,5 msec durchführen zu können, sind erhebliche Kräfte notwendig. Insbesondere ist es notwendig, eine Spule zu schaffen, die einen ausreichenden Stromfluß ermöglicht, die aber andererseits nicht zu schwer ist. Dies sind an sich zwei widersprechende Forderungen.

Es ist Aufgabe der Erfindung, einen Linearmotor zum raschen Hin- und Herbewegen eines massebehafteten Läuferschlittenbauteiles zu schaffen, dessen Erregerspulen, die vom Läuferschlitten getragen werden, bei geringem Gewicht einen hohen Stromdurchgang ermöglichen, wobei der Schlitten möglichst reibungsarm gelagert sein soll.

Die gestellte Aufgabe ist erfindungsgemäß dadurch gelöst, daß die mit ihrer Achse senkrecht zur Verschieberichtung angeordnete Flachspule aus einer eloxierten Aluminiumfolie gewickelt ist und der flache Kunststoffschlitten in Gaslagern geführt ist, die sich durch die Statoreisen auf Abstand haltende Aluminiumbrücken zwischen den Statoreisen erstrecken.

Aluminium hat ein wesentlich geringeres spezifisches Gewicht als Kupfer. Deshalb eignet sich Aluminium besonders gut für Leichtbauteile. Eine Aluminiumfolie, die an der Oberfläche eine Isolierschicht aufweist, ermöglicht einen hohen Stromdurchgang bei geringem Gewicht. Bei einem Folienquerschnitt von 10 mm x 0,1 mm und 130 Windungen kann die Spule zeitweise mit 32 A belastet werden, ohne daß die Spule Schaden leidet. Sehr wesentlich ist dabei, daß die Potentialdifferenz zwischen den einzelnen Windungen außerordentlich gering ist.

Die Luftlager reduzieren die Reibung zwischen Schlitten und Ständer auf ein Minimum. Als vorteilhaft hat es sich dabei erwiesen, wenn gemäß einer Weiterbildung der Erfindung das Gaslager aus einer porösen Kohlebuchse besteht, durch die ein gasförmiges Medium auf ein in der Hülse geführtes Bauteil gedrückt wird.

Die beschleunigenden und abzubremsenden Kräfte sind bei den hohen Verschiebegeschwindigkeiten ganz erheblich. Anfahren und Abbremsen kann deshalb zu ganz erheblichen Schlägen in der Motoraufhängung führen. Um derartige Schläge zu vermeiden, ist nach einer weiteren Ausgestaltung der Erfindung vorgesehen, daß zwei gleich ausgebildete Linearmotorteile axial nebeneinander angeordnet sind und gegenläufig erregt werden. Durch die gegenläufigen Bewegungen der Läufer werden die Schläge innerhalb der gesamten Motoreinheit aufgehoben.

Die Erfindung wird anhand des in der Zeichnung dargestellten Ausführungsbeispieles näher erläutert. Es zeigen:

Fig 1 auf einem Träger zwei gegenläufig arbeitende Linearmotoren, von denen einer ein Strahlenfilter verstellt,

Fig. 2 einen Schnitt durch den das Strahlenfilter tragenden Linearmotor nach Fig. 1,

Fig. 3 einen Schnitt durch ein Gaslager, das zum Führen des Linearmotorschlittens eingesetzt wird.

Auf einem Träger 1 sind zwei Linearmotoren 3a, 3b in Längsrichtung hintereinander angeordnet. Der Linearmotor 3a dient dem Verstellen eines Strahlenfilters 5, während der Linearmotor 3b dem Verstellen eines Gegengewichtes 7 dient.

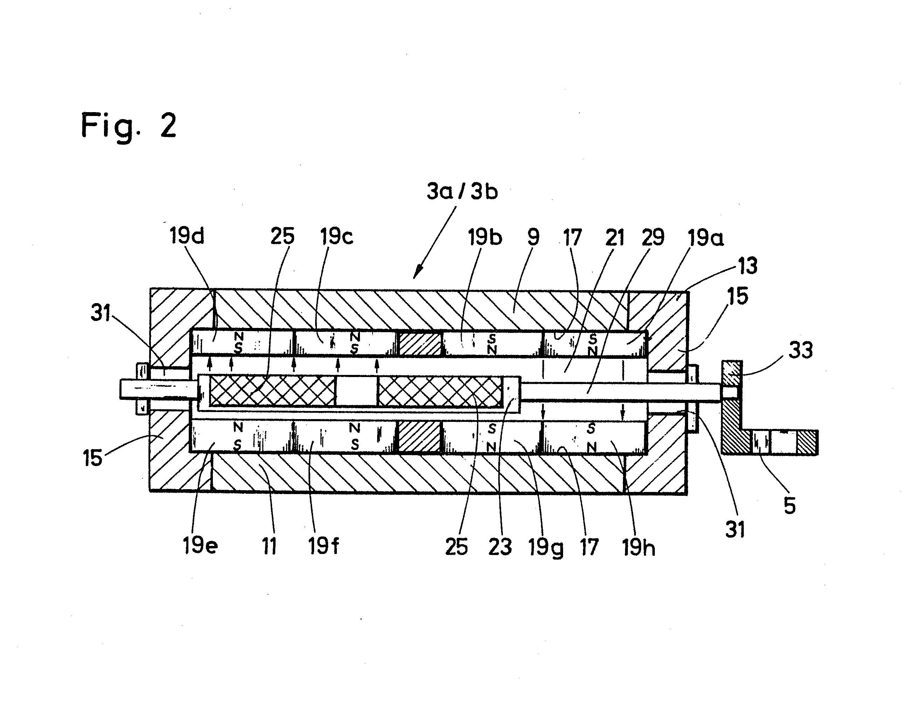

Der Linearmotor 3a hat zwei Statoreisen 9 und 11, die an ihren axialen Enden 13 mittels Aluminiumbrücken 15 miteinander verbunden sind. An den Innenseiten 17 der Statoreisen sind Dauermagnetplatten 19 befestigt. Die Dauermagnetplatten bilden im Luftspalt 21 zwischen sich ein Magnetfeld 21 aus, dessen Ausbildung in Fig. 2 näher erläutert ist.

In dem Luftspalt 21 ist ein Schlitten 23 für eine Luftspule 25 in Richtung der Mittellinie 27 verschieblich gelagert. Der Kunststoffschlitten 23 nimmt in ihm flach liegend mit der Mittelachse senkrecht zur Verschieberichtung die aus einer eloxierten Aluminiumfolie gewickelte Spule auf. Mit Hilfe von Führungsstangen 29 (siehe auch Fig. 2) ist der Schlitten 23 im Luftspalt 21 verschieblich gelagert. Die Stangen sind durch die Aluminiumbrücken 15 hindurchgeführt und in diesen mittels Gaslagern 31 verschleißfest und reibungsarm gelagert.

An den Führungsstangen 29 ist außerhalb des Motors 3a ein Halter 33 befestigt, der das Strahlenfilter 5 trägt. Mit Hilfe des Strahlenfilters 5 kann ein von einer Strahlungsquelle 35 ausgehendes divergierendes Strahlenbündel 37 auf einen Strahlenkegel 39 begrenzt werden.

Der Linearmotor 3b entspricht in seinem Aufbau vollständig
dem Linearmotor nach 3a. An den Führungsstangen 29 ist
jedoch abweichend vom Strahlenfilter 5 das Gegengewicht 7
befestigt. Die beiden Linearmotoren werden im Betrieb
gegenläufig erregt.

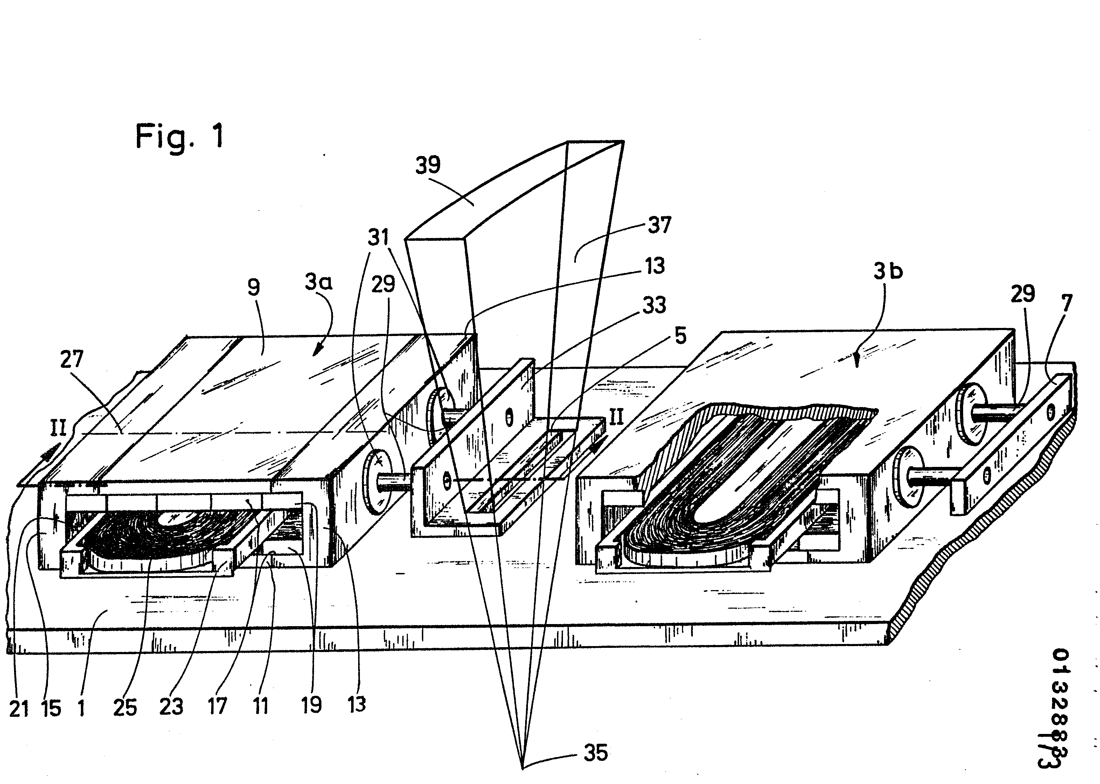

In dem Schnitt längs der Linie II-II nach Fig. 1 ist der
Aufbau der Linearmotoren 3a und 3b in Fig. 2 dargestellt.
Die Statoreisen 9, 11 werden an ihren axialen Enden
mittels der Aluminiumbrücken 15 verbunden. Auf den Innenseiten 17 der Statoreisen 9, 11, die einander gegenüberliegen, sind Dauermagneten 19a bis 19h angeordnet. Diese
Dauermagneten 19a bis 19h bilden im Luftspalt 21 dauermagnetische Felder aus und sind dabei derart diametral
magnetisiert, daß die Nordpole N bei den Dauermagneten 19a
und 19b und 19e und 19f am Luftspalt 21 liegen. Bei den
Dauermagneten 19c, 19d, 19g und 19h finden sich am Luftspalt die Südpole S. Damit ist das magnetische Feld im
Luftspalt 21 im linken Teil des Motors umgekehrt ausgerichtet wie im rechten Teil des Motors. Die Spule, deren
Achse in Richtung des Magnetfeldes liegt, ist im Magnetfeld des Luftspaltes bei Erregung verschieblich. Die
Dauermagneten sind vorzugsweise Sinterpermanentmagnetplatten aus Samarium-Cobalt. Derartige Magnete bilden ein
außerordentlich starkes Magnetfeld aus.

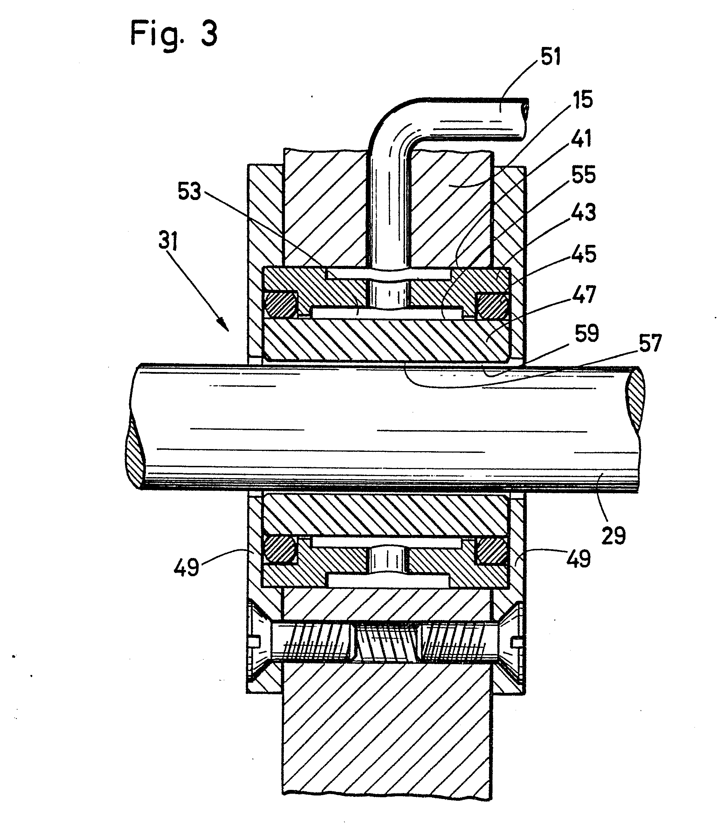

Die Gaslager 31 sind in Fig. 3 im Datail dargestellt. Die
Gaslager sind in den Aluminiumbrücken 15 angeordnet, und
zwar jeweils in einer Bohrung 41. In die Bohrung ist eine
Messinghülse 43 eingepaßt, die mittels an ihren äußeren
Hülsenenden gelegener O-Ringe 45 in ihr eine Buchse 47 aus
poröser Kunstkohle festlegt. Das Lager wird zusammengehalten mit Hilfe von aufgeschraubten Flanschen 49, die die O-Ringe gegen den Spalt zwischen Messinghülse und Kohlebuchse drücken. Durch die Kohlebuchse 47 ist die Führungsstange 29 hindurchgeführt.

Das Gaslager 31 wird mit Preßluft oder Stickstoff betrieben. Stickstoff wird bevorzugt, da er trocken ist und keine Feuchtigkeit abgeben kann. Zur Versorgung der Kohlebuchse mit unter Überdruck stehendem Gas dient eine Versorgungsleitung 51. Diese Versorgungsleitung 51 führt zu einem Ringkanal 53 in der Messingbuchse 43. Dieser Ringkanal 53 umschließt die Kohlebuchse 47 an ihrer Außenwand 55. Wird nun Gas in den Ringkanal 53 eingedrückt, dann durchwandern die Gasmoleküle die Kohle der Kohlebuchse 47, und es bildet sich zwischen der Oberfläche der Führungsstange 29 und der Innenwand 57 der Kohlebuchse eine tragende Gasschicht 59 aus, in der die Führungsstange 29 verschleißfrei geführt ist.

**PATENTANSPRÜCHE**

1. Linearmotor zum raschen Hin- und Herbewegen eines massebehafteten Läuferschlittenbauteiles, insbesondere eines Strahlenfilters, in einem Röntgen-Computer-Tomographen, mit parallel und im Abstand zueinander angeordneten, flächigen Statoreisen, mit Dauermagneten, die auf den aufeinander zu weisenden Seiten der an den Enden offenen Statoreisen angeordnet sind und über den sich dabei ausbildenden einzigen Luftspalt zwischen sich ein Magnetfeld aufbauen, und mit einer im dauermagnetischen Magnetfeld verschieblichen, von einem Schlitten geführten Spule, dadurch gekennzeichnet, daß die mit ihrer Achse senkrecht zur Verschieberichtung angeordnete Flachspule (25) aus einer eloxierten Aluminiumfolie gewickelt ist und der flache Kunststoffschlitten (23) in Gaslagern (31) geführt ist, die sich durch die Statoreisen (9, 11) auf Abstand haltende Aluminiumbrücken (15) zwischen den Statoreisen (9, 11) erstrecken.

2. Linearmotor nach Anspruch 1, dadurch gekennzeichnet, daß die Folie einen Querschnitt von 10 mm x 0,1 mm aufweist.

3. Linearmotor nach Anspruch 1, dadurch gekennzeichnet, daß das Gaslager aus einer porösen Kohlebuchse besteht, durch die ein gasförmiges Medium auf ein in der Buchse geführtes Bauteil gedrückt wird.

4. Linearmotor nach Anspruch 1, dadurch gekennzeichnet, daß zwei gleich ausgebildete Linearmotorteile axial nebeneinander angeordnet sind und gegenläufig erregt werden.

Fig. 1

0132883

Reference numerals: 7, 29, 3b, 37, 13, 33, 5, 35, 31, 29, 3a, 9, 27, II, 19, 13, 17, 11, 23, 25, 1, 21, 15

1-III-PHD 83-066

Fig. 2

## Fig. 3